(19) Europäisches Patentamt

European Patent Office

Office européen des brevets

(11) EP 1 233 162 A1

## (12) EUROPEAN PATENT APPLICATION

(43) Date of publication:
21.08.2002 Bulletin 2002/34

(51) Int Cl.⁷: **F02B 37/00**, F02B 37/10, F01N 3/32

(21) Application number: 01117778.9

(22) Date of filing: 01.08.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.01.2001 US 259544 P**

(71) Applicant: **Superdrive Inc.**
**Piqua, OH 45356 (US)**

(72) Inventor: **Mitchell, Herrman R.**
**Dayton, OH 45424-4666 (US)**

(74) Representative: **UEXKÜLL & STOLBERG**
**Patentanwälte**
**Beselerstrasse 4**
**22607 Hamburg (DE)**

(54) **Supplemental air system for engine exhaust manifolds**

(57)     The invention relates to a system comprising a piston engine and a super charger wherein additional air is provided to the exhaust manifold which is the energy source for the operation of the turbo charger.

Figure 2: Process Flow Diagram for the Invention

**Description**

**BACKGROUND OF THE INVENTION:**

Conventional commercial trucks use diesel engines with turbochargers and geared transmissions. The turbocharger gives extra power to the engine without adding much weight. The turbocharger thermodynamic cycle, the Brayton Cycle, is more energy efficient than the piston engine Otto Cycle.

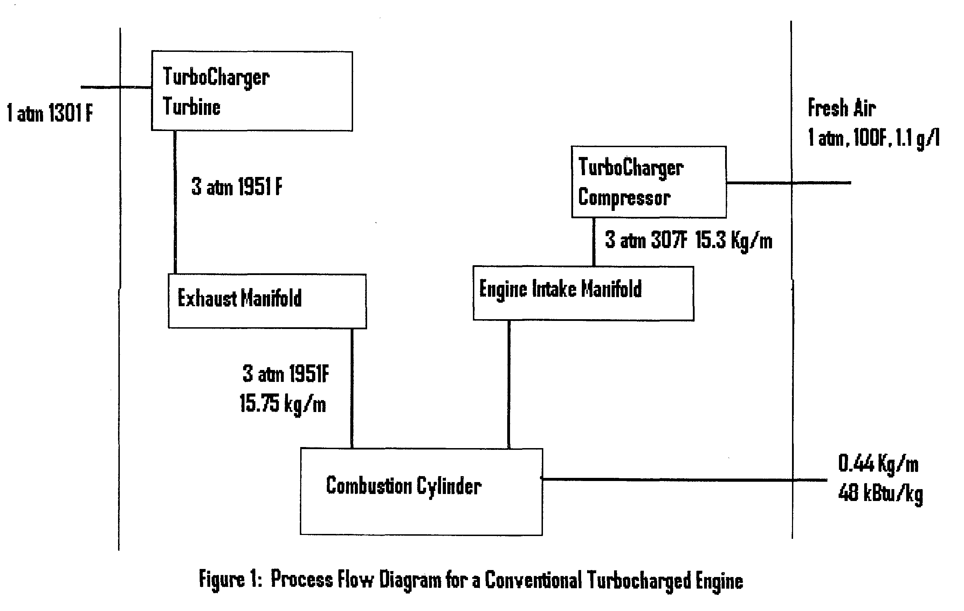

A turbocharger consists of two parts: a compressor and a turbine. The typical truck turbocharger has a radial compressor. It sucks in ambient temperature and pressure air from the roadway, compresses it 3 fold, raising its pressure (to 30 psig. = 45 psia. = 3 atmospheres absolute (atm)) and temperature to 307°F. See Figure 1 for a Process Flow Diagram of a typical piston engine with turbocharger.

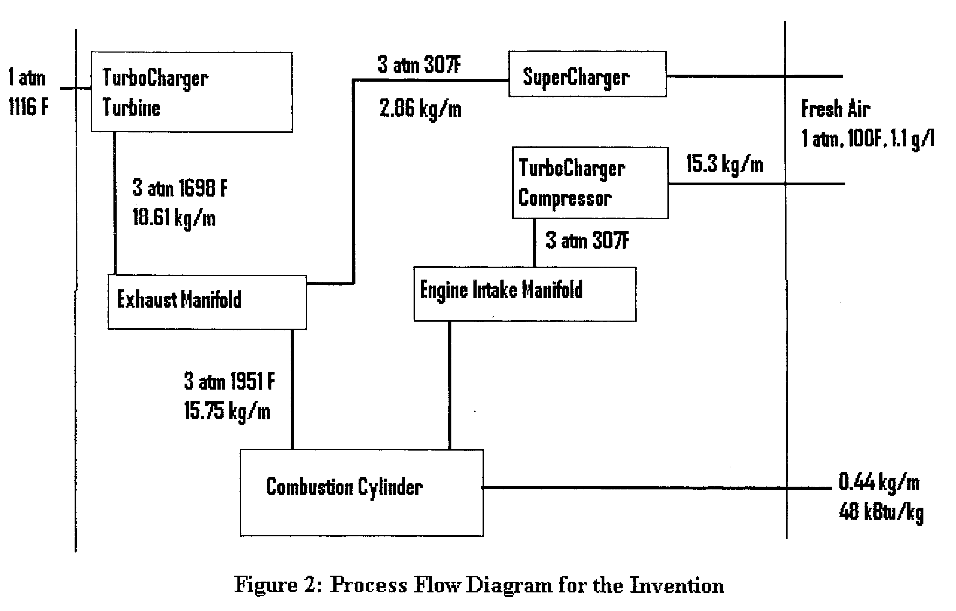

Dr. Michel Saad 1993 calculated the temperatures and densities in Figure 1 & 2 using the Ideal Gas Law from page 16 of Compressible Fluid Flow. Air is an Ideal gas in the temperature and pressure ranges of our cases. The absolute temperature (degrees Rankine 460°R = 0°F) ratio is proportional to the absolute pressure ratio to the 0.286 power. The density ratio is proportional to the pressure ratio to the 0.714 power.

$$(T_{out}/T_{in}) = (P_{out}/P_{in})^{0.286}$$

$$(D_{out}/D_{in}) = (P_{out}/P_{in})^{0.714}$$

The heat energy from the fuel is 48,000 Btu/kg for standard diesel fuel. The fuel heat raised the air and combustion gas temperatures by the First Law of Thermodynamics: Conservation of Energy, also from Saad and Sadie Carnot, the Father of Thermodynamics. These gases increase in temperature at the rate of 0.528 Btu/kg°F.

$$\text{Fuel Heat} = \text{Air Mass} \times 0.528 \text{ Btu/kg}°\text{F} \times \text{Temperature Increase}$$

Some trucks put the compressed air through a radiator, called an intercooler, to cool and densify it. The compressed air then goes through piping to the intake manifold of the diesel engine. When the intake valve of the cylinder opens, the compressed air rushes in the cylinder at this elevated pressure.

After the piston reaches its bottom position, the intake valve closes. The crankshaft then pushes the piston up to minimum cylinder gas volume. Diesel fuel is injected in the cylinder. The fuel ignites, raising the gas pressure to about 2,200 psig. and temperature to 2,600°F. This excess pressure pushes the piston down and the crankshaft around, providing torque and rotary motion to accelerate and move the truck.

As environmental regulations have increased, diesel manufacturers added excess air to the combustion chamber to reduce the emissions of Carbon Monoxide, Hydrocarbons, and Particulate Soot. These emissions cause lung and pancreas cancers.

The excess air reduces the peak temperature of combustion, thereby lowering the thermodynamic efficiency of the engine. Today's piston engines use 100% excess air above a stochiometric (chemically exact) mix to prevent cylinder and lubricant overheating. Though clean, 100% excess air reduces the thermodynamic efficiency of the engine.

Though the excess air diesel leaves a clean odorless exhaust plume, it has a bad side effect. The excess oxygen and nitrogen will combine to form Nitrous Oxides (NOx) at temperatures above 1,700F. The longer the duration of the temperature of the gases above 1,700F, and the more excess air above what is needed to burn the fuel (stochiometric ratio) the more Nitrous Oxide molecules are formed. Besides combining with moisture to form acid rain, NOx is also toxic to humans (nucleating cancer sites in lungs).

When the piston reaches the bottom of the cylinder, the exhaust valve opens. The crankshaft moves the piston up the cylinder, expelling the combusted gases. The gases leave the cylinder and enter the exhaust manifold. With a normally aspirated engine, the exhaust manifold temperature is about 1,300F, well below the 1,700F where NOx formation develops. But in turbocharged engines, the exhaust manifold temperature is above 1,700F, and a lot of NOx forms there. Gas residence time in the exhaust manifold is about equal to the time at high temperature in the cylinder.

The exhaust gases leave the manifold and enter a short pipe to the turbine inlet. The gas pressure spins the turbine. The gases leave the turbine slightly above ambient pressure and at a temperature of 1,301F per Figure 1.

The turbine shaft connects to the compressor shaft. The turbine powers the compressor. Both run at 20,000 revolutions per minute (rpm) and higher. Most truck turbines are radial, but larger turbines can be axial flow style for better efficiency.

The power a turbine generates is proportional to the gas flow rate to the third power. At lower engine rpm, the turbine accelerates slower when more fuel is added to speed up the engine. As a result, the fuel air ratio in the cylinders gets above stochiometric. Half burnt fuel comes out the exhaust as soot, until the turbine and engine speed up. The general public and the Environmental Protection Agency find this soot objectionable.

Some components of the invention have been disclosed before. These components achieve some of the invention's benefits, but not all. All the components of the invention have not been disclosed before. Nor has the combination of all the components of the invention been disclosed.

For instance, Harndorf & Kuhnt disclose a system that pipes air from a supercharger to the turbine of a turbocharger. This parallel stream of fresh air makes the turbine spin faster at lower engine rpm. The faster spinning turbine speeds up quicker when fuel is added, thereby maintaining excess air to the engine to prevent soot formation.

A supercharger is an air compressor powered by the main shaft of the piston engine. The supercharger usually compresses ambient air and pipes it to the intake manifold of the engine cylinders.

Harndorf & Kuhnt logically and obviously pipe the supercharger compressed air to impingement jets aimed at the blades of the turbocharger turbine so as to get maximum momentum transfer. They achieve a 70% reduction in Carbon Monoxide and carbon particulates, but a 30% increase in NOx, during engine accelerations around 600 rpm engine speed.

Tomita et al discloses a Hybrid Charging System for Heavy Duty Diesel Engines that uses a supercharger and turbocharger. When the boost pressure from the turbocharger is inadequate (below 1,000 rpm engine speed), a magnetic clutch engages a supercharger.

The turbocharger compressor feeds its full compressed flow to the supercharger inlet. The supercharger is a screw type versus a lobed roots type. It operates at a pressure ratio of 1.8. The supercharger outlet feeds an intercooler. The intercooler outlet is piped to the engine intake manifold. The engine exhaust manifold is piped to the turbocharger turbine inlet. The turbine outlet attaches to the exhaust pipe.

Tomita's system had an 80% reduction in smoke/soot particulate emissions at 600-rpm engine speed. He also had 50% more air in the cylinders with an Air-to-Fuel ratio of 24.6 versus 16.6 for turbocharger only. He also had 20% faster acceleration.

## SUMMARY OF THE INVENTION:

The present invention includes a supercharger, a turbocharger, an intercooler. The invention has several unique aspects.

1. The supercharger takes in ambient air, compresses it, and delivers it to the engine exhaust manifold at points furthest from the turbocharger turbine inlet.
2. The supercharger increases airflow through the turbocharger turbine thereby raising compressor rpm and boost pressure. Higher compressor boost pressure means higher engine cylinder pressure. The extra pressure causes extra crankshaft torque despite low engine revolutions per minute (rpm). thereby making combination with a hydrostatic transmission an attractive energy boost at low engine rpm.
3. The fuzzy logic controller makes the Air-to-Fuel ratio in the engine closer to stochiometric for maximum engine thermodynamic efficiency,
4. The supercharger air in the engine exhaust manifold provides secondary combustion to keep hydrocarbon, soot and Carbon Monoxide emissions low.
5. The supercharger air in the exhaust manifold cools the exhaust gases to reduce NOx formation.
6. The fuzzy logic controller also keeps the engine at near constant rpm to avoid wasted energy from heavy crankshaft and piston assembly accelerations/decelerations.
7. The fuzzy logic controller adjusts fuel flow to change cylinder pressure and hence engine torque and power to the hydrostatic drive.
8. The fuzzy logic controller adjusts swash plate angles in the hydrostatic drive to adjust wheel rpm and truck speed while keeping engine speed constant.

The benefits of the invention are many:

1. The fresh supercharged air at only 307F, cools the exhaust gases below the 1,700F NOx formation point.
2. The fresh supercharged air also burns excess carbon monoxide, hydrocarbons, and particulate soot in the engine exhaust manifold, thereby recovering their energy and lowering emissions.
3. Because the supercharged air in the exhaust manifold assists the burning of the excess carbon monoxide and hydrocarbons, the engine can run closer to stochiometric conditions.
4. The supercharger puts more air through the turbocharger turbine at low engine rpm thereby reducing soot from engine accelerations.

5. The supercharger causes high torque at low engine rpm thereby allowing high power at low rpm thereby saving energy wasted in accelerating/decelerating pistons and wear on the engine.

6. The high engine torque at low rpm afforded by the invention allows use of a continuously variable hydrostatic drive that saves further energy wasted in accelerating pistons and crankshaft assembly.

7. The low engine rpm afforded by the invention makes for a quieter engine and drive train during normal operation both for drivers and the environment.

8. Using a hydrostatic drive with the invention is easier to operate than manual or semi-automatic transmissions.

9. Using a hydrostatic drive with the invention has less frequent and less costly maintenance requirements than manual or semi-automatic transmissions.

## BRIEF DESCRIPTION OF THE DRAWINGS:

Figure 1 shows the Process Flow Diagram for a Conventional Turbocharged Engine. Figure 2 shows the Process Flow Diagram for the invention.

Figures 3 & 4 show the invention attached to engine 14, with the supercharger 6 feeding compressed air to the turbocharger turbine 13 through a junction box called a supplemental air adapter 9.

Figures 5 & 6 show the invention attached to engine 14, with the supercharger 6 feeding compressed air to the far ends of exhaust manifold 7.

Figures 7 & 8 show a separate air filter 15 for the supercharger 6.

## DETAILED DESCRIPTION OF THE INVENTION:

The invention has many features and functions.

I. HIGH EFFICIENCY ENGINE COOLING SYSTEM: Foremost, the invention is a high efficiency heat exchanger. The hottest part of the engine is the exhaust manifold. It is the source of metal thermal conduction throughout the engine. See Figure 2 for a Process Flow Diagram for the invention.

A. FAN AND RADIATOR ELIMINATION: Conventional engines use water to cool the engine metal. Besides 5 hp water pump, conventional systems use a big, heavy, air-cooled radiator. The radiator has a 70 hp fan to get enough air across the radiator to cool it. The water is kept at 180°F. The temperature drop to ambient, which drives the heat transfer, is only 80°F in our comparative math model. Whereas the temperature difference in the exhaust manifold caused by the invention is 250°F.

Because the temperature difference for the invention is 3 times that of the radiator, the invention needs only one third of the area of the radiator to do the same cooling. The area inside the exhaust manifold is about one third that of the radiator; therefore the radiator, pump, and fan could be eliminated by the invention. The invention uses only 5 hp versus 75 hp for the conventional system. The savings is 70 hp or about 20% of total engine horsepower.

The Supplemental Air System may not do all the cooling necessary for the engine. The invention includes putting forced air through the engine liquid channels to do any residual cooling. Putting cooling metal fins on the engine is also part of the invention.

The invention may result in lower average temperatures throughout the engine. These lower temperatures dramatically increase the fatigue life and fatigue strength of engine components.

Because engines are designed for fatigue strength, the invention allows and includes lighter, thinner, cheaper engine parts including the block, pistons, crankshaft, piston arms, valves, rocker arms, and cam shafts. Engine temperatures might be low enough to allow fiber reinforced polymer components, which have infinite fatigue life.

Lower engine temperatures afforded by the invention also dramatically increase wear life for wearing surfaces including bearings, cylinder sleeves, piston rings, valves, and valve seats.

Lower engine temperatures also increase the life of the oil and the engine coolant.

Lower exhaust manifold temperatures specifically reduce the formation of NOx among the excess air molecules.

B. COOLING ENERGY RECOVERED IN TURBOCHARGER: Conventional engines discard the energy in their cooling air after sucking it through the radiator. The invention, however, sends the heat energy acquired from the exhaust manifold to the turbocharger turbine. About a third of the heat energy is recovered as turbine work. About 20% of total fuel energy is removed by the radiator as heat. Therefore, The invention recovers about 7% of total fuel energy and turns it into engine work. Since conventional engines convert only about 28% of total fuel heat to engine work, the invention adds 25% to engine work output for the same amount of fuel input.

These two energy efficiency improvements add to a 45% fuel savings. This helps to explain why the invention test vehicles get 20% plus fuel savings.

II. EXHAUST CLEANING: The invention cleans emissions out of the engine exhaust.

A. NOX PREVENTION: The invention prevents the formation of NOx in the exhaust by cooling the cylinder exhaust gases entering the exhaust manifold below the 1,700°F needed for NOx formation.

B. CARBON CONVERSION: The invention cleans Carbon Monoxide, Hydrocarbons (HC), and Particulate Soot from the exhaust gases entering the exhaust manifold from the engine cylinder by converting them to Carbon Dioxide by burning them with the oxygen from the fresh supercharger air.

C. SOOT PREVENTION: The invention also reduces soot formation by pumping extra air into the cylinders at low engine rpm. Without this excess air at low engine rpm, engine transients can spew excess fuel out the exhaust. The invention pumps extra air into the cylinders by speeding up the turbocharger by pumping supplemental air into the turbocharger turbine to speed it up.

III. ENERGY SAVINGS: The invention saves energy several ways.

A. ENGINE COOLING EFFICIENCY: As described above, the invention saves on fan and pump energy for the liquid cooling system, in some cases eliminating it. The weight savings of eliminating the liquid cooling system reduces acceleration energy and rolling resistance for the truck. This weight savings also allows the truck to add payload, an economic benefit. The invention also recovers energy from the cooling heat by running it through the turbocharger turbine as mentioned above.

B. ENERGY RECOVERY FROM SOOT: By burning unburnt carbon and hydrogen in the exhaust manifold or in the cylinder, the invention saves energy wasted by conventional engines.

C. LOWER RPM LIGHTER WEIGHT: Because the invention allows high power output at low engine rpm, the energy for accelerating and decelerating pistons and valve trains is reduced from conventional engines which need to run at higher rpm to achieve reasonable power. Because the engine is cooler, the fatigue strength of the engine components is higher. With better heat control, engine parts can be thinner and lighter. The lighter weight means less wasted energy accelerating and decelerating piston assemblies. The lighter weight of the engine means a lighter support frame and a lighter truck. Besides less truck acceleration energy waste and rolling friction waste, the truck can carry more payload. US law limits truck gross loaded weight to 80,000 lbs. If the truck weight is lowered, the payload can increase. Trucks are paid on the cargo weight they carry. Rolling friction is proportional to weight on the axle bearings and tires. As tires compress, their rubber absorbs energy from viscous hysterisis of compression and decompression from rolling. A lighter truck, when empty, saves fuel.

D. STEADY RPM: Using the invention with a continuously variable transmission, the engine can run at a steady rpm and avoid the energy wasted in accelerating and decelerating the crankshaft and piston assembly.

IV. HYDROSTATIC TRANSMISSION OPERATION: The invention utilizing a continuously variable hydrostatic transmission has many benefits.

First it allows the engine to run at constant rpm while the wheels run at variable rpm. This variability is achieved by adjusting the angle of the swash plates in the hydraulic pump and motor and thereby the flow rate of the hydraulic fluid.

The power to the wheels, torque times speed, is adjusted by adjusting the torque from the engine, since its speed is constant. The invention raises engine torque by increasing the engine cylinder pressure. The invention raises cylinder pressure by increasing combustion temperature by raising fuel input rate. When the engine reduces its power output, fuel rates and combustion temperatures and pressures drop.

The hydrostatic transmission is easier to drive than a manual or semi-automatic transmission. A driver operates a hydrostatic transmission the same way he would an automatic transmission for a car. He does not have to use a clutch and shift gears the way he does on a manual. With the invention, the driver can focus on driving.

V. DETAILED DESCRIPTION OF THE DRAWINGS: Most heavy-duty trucks today are equipped with a turbocharger to boost engine output through increased cylinder head pressure. The purpose of the invention is to increase the rpm of the on-board turbocharger. At increased rpm, the turbocharger compressor increases the boost input pressure for the engine intake manifold, even at low engine rpm. The turbocharger provides effective boost for the engine to have higher torque at low engine rpm.

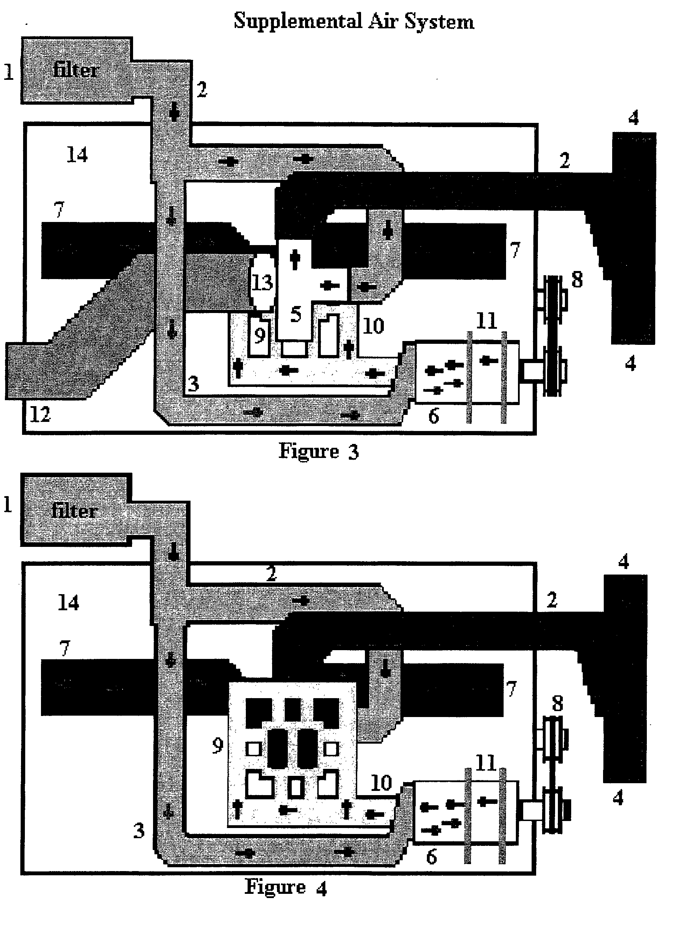

System configuration of the invention is identified using the following list of components as found on drawing references Figures 3 to 8:

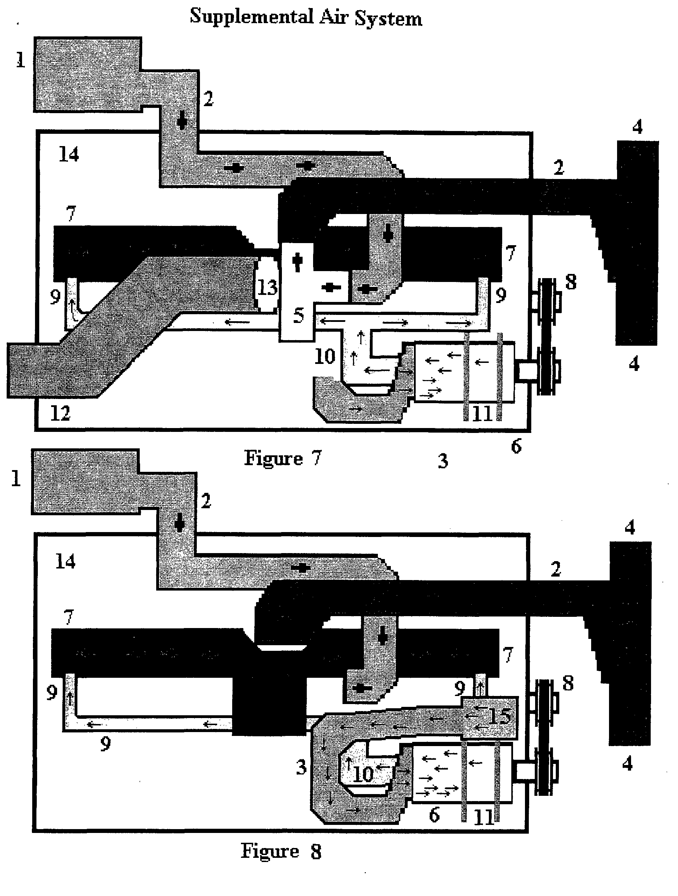

Air filter assembly 1, provides filtered air for the engine and also for the normally high rpm functions of the turbocharger and supercharger units. Operation without a filter can allow foreign material to damage the turbocharger, supercharger or engine if material enters while operating. Figures 7 & 8 show a separate air filter 15 for the supercharger 6.

Air filter outlet tubing 2, four-inch (4") air tubing, connects the output of the air filter 1 to the input of the turbocharger compressor 5. Additional four-inch tubing is used to connect the output of the turbocharger compressor 5 to the input of the intercooler 4.

Supercharger inlet tubing 3, three-inch tubing (3"), connects the supercharger to the output of the air filter. The three-inch tubing channels filtered air to the supercharger 6 while in operation.

Intercooler 4, keeps the boost air temperature down by allowing the boost air to travel through the intercooler 4 before it enters the engine intake manifold.

Turbocharger compressor 5 develops the boost pressure for the diesel engine operation. Normal turbocharger operation is a function of the engine exhaust gases flowing through the turbine of the turbocharger unit. The turbine is connected directly to the fresh air cavity turbine inside the turbocharger unit causing the fresh air turbine to rotate at the same speed. The high rpm operation of the fresh air turbine pulls air into the unit from the intake filter, item 1. The high speed operation of the fresh air turbine pushes more air into the intake manifold than what the engine can use which causes a back pressure to build. This back-pressure is in effect the air boost pressure for the diesel engine operation.

Supercharger 6 is used to supply supplemental air (or make-up air) to the inlet of the turbocharger turbine 13. In the conventional turbocharger, turbine speed is based on the volume and pressure available from the engine exhaust system.

With the introduction of make-up air into the exhaust system, the turbocharger rpm will increase, causing additional manifold boost pressure. This increased manifold pressure creates an increased output from each combustion chamber. Pressure will continue to increase until the exhaust volume and pressure reaches the limits of the turbocharger. This output level will be maintained by activation of the waste gate or until loading conditions change.

As power requirements change, more or less fuel is used causing the engine rpm to change. When the engine rpm changes, so does the rpm of the direct drive of the supercharger causing an air volume change that combines with the exhaust air to drive the turbocharger. Under these conditions, the output of the turbocharger is sufficient to create boost for the engine even at idle rpm.

Exhaust manifold 7, is part of the diesel engine. It accepts the hot exhaust gases from each combustion chamber of the engine 14 and channels the gases to the output of the exhaust manifold 7.

Output drive pulley 8, connected to the main crankshaft of engine 14, is used as a direct drive source for the drive pulley of supercharger 6.

Supplemental air adapter 9, is mounted between the turbocharger turbine 13 and the output of the exhaust manifold 7. This adapter or similar air input source is required for the Invention to function. The turbocharger turbine 13 is mounted directly to the output of the supplemental air adapter 9 where it converts the combined energy in the engine exhaust gases and the supplemental air from supercharger 6 to useful work.

Supercharger outlet tubing 10, low-pressure air tubing, is used to connect the output of the supercharger 6 to the input of the connectors of supplemental air adapters 9.

Supercharger bracket assembly 11 is built to mount the supercharger 6 to the engine 14 and can be located in any position to allow the supercharger 6 to operate.

Exhaust pipe 12, is used to connect to the output of the turbocharger turbine 13. From there the turbocharger gases are channeled through the exhaust pipe to the muffler of the vehicle and expelled into the air as normal exhaust.

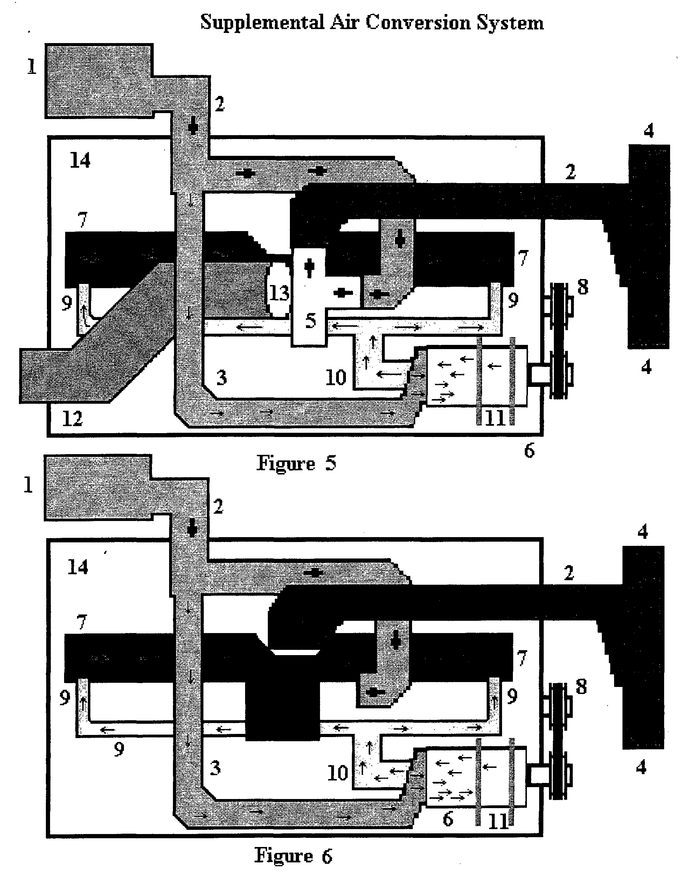

Another configuration for the Invention is shown in Figures 5 to 8. These drawings indicate injection of the supplemental air directly into the exhaust manifold 7 near the number one and number six exhaust ports of an inline diesel, six-cylinder engine. For other type engines, V-8, V-6, etc., the same principle applies: air injection should occur at a point farthest away from the turbocharger turbine inlet connections to allow maximum secondary combustion and/or cooling.

Using this approach will accomplish the objective of allowing the most time available for the air supplied by the Invention to mix inside of the exhaust manifold with the hot gases from the exhaust ports of the engine. With air injection into the manifold at these locations, the injected clean air will have more time to mix with the hot air from the engine.

The supplemental air will be more effective in its application to the turbine blades of the turbocharger after it goes through some expansion after mixing with the hot gases. The increased boost pressure helps to reduce engine pollution by providing boost pressure across the entire engine operating range. A turbocharged, or supercharged, engine requires less fuel, because the boost pressure creates a higher combustion pressure from a smaller amount of fuel.

**Basic System Concept of Turbocharged Engines:**

In conventional operation, the useful output of a turbocharger is restricted to an engine speed, above 1,000 rpm, significantly higher than normal engine idle rpm. An idling engine does not produce enough exhaust pressure or gas volume to push the turbocharger to a high enough rpm to be effective.

After an engine's rpm has reached approximately 1,000 rpm, or higher, the exhaust will produce enough pressure and volume to push the turbocharger rpm high enough to provide additional boost pressure for the intake manifold. With the additional boost pressure applied to the engine's intake manifold, the engine puts out an increased level of horsepower and torque.

A supercharger is normally driven directly from the engine main crankshaft. Since the supercharger is a direct drive device, its output boost pressure is directly proportional to engine rpm. But through selection of the appropriate rpm step-up ratio, adequate boost pressure can be made available even at engine idle rpm.

The output of the supercharger is normally directed into the input of the engine intake manifold. Operation of a supercharger in this manner, requires the supercharger to produce a volume of air greater than the total operational volume of all the pistons operating within the engine. It requires the supercharger to have a very high volume output at all operating ranges of the engine.

**Invention Concept:**

The function of the Invention is to provide additional air to the exhaust manifold, which is the energy source for operation of the turbocharger.

The additional volume of air, provided by the positive displacement supercharger, combines with the exhaust gases that drive the turbocharger. This additional air assists the turbocharger at low engine rpm and throughout its operational range to produce additional turbocharger compressor boost pressure to increase engine power and/or torque.

There are four basic reasons why the Invention is more effective than just using a supercharger to do the same function.

First: the amount of air pressure and flow rate the supercharger 6 has to produce is less than a conventional supercharger configuration. Therefore, the engine does less work to drive supercharger 6 than a conventional unit.

Second: the air flow rate requirement is less than a conventional configuration, because the output of the supercharger is connected to the supplemental air adapter 9 located in-line with the output of the exhaust manifold 7. In this location, the air from the supercharger 6 combines with gases from the exhaust manifold 7. The airflow rate from the supercharger is reduced to a small percentage of that required to boost the engine with the supercharger alone.

Third: the noise level of the supercharger 6 is significantly reduced and does not require any additional soundproofing.

Fourth: at this lower speed, the operational life of the supercharger 6 will increase because of less wear and tear.

VI. INVENTION CONFIGURATIONS: The invention can be configured to achieve its designed function in many different ways. For instance, the list of configurations below describes several of the ways.

1. A system comprising a piston engine and a supercharger wherein:

   The supercharger pumps fresh air into the engine exhaust manifold.

2. The system of configuration 1 including a turbocharger.

3. A system comprising a piston engine and a turbocharger wherein:

   The turbocharger compressor pumps some fresh air to the engine exhaust manifold.

4. The system of configuration 1 wherein the fresh airflow from the supercharger enters the exhaust manifold at points furthest from the manifold outlet.

5. The system of configuration 2 wherein the fresh airflow from the supercharger enters the exhaust manifold at points furthest from the manifold outlet.

6. A system comprising a piston engine, a turbocharger, and a supercharger wherein:

   The supercharger pumps fresh air to the exit of the engine exhaust manifold.

7. A system comprising a piston engine, a turbocharger, and a supercharger wherein:

   The supercharger pumps fresh air to a conduit connecting the engine exhaust manifold exit to the inlet of the turbocharger turbine.

8. A system comprising a piston engine, a turbocharger, and a supercharger wherein:

The supercharger pumps fresh air to the inlet of the turbocharger turbine.

9. A system comprising a piston engine, a turbocharger, a supercharger, and a hydrostatic drive wherein:

The supercharger pumps fresh air to the engine exhaust manifold.

10. A system comprising a piston engine, a turbocharger, an intercooler, and a supercharger wherein:

The supercharger pumps fresh air to the engine exhaust manifold.


**Claims**

1.  A system comprising a piston engine and a supercharger wherein:

    The supercharger pumps fresh air into the engine exhaust manifold.

2.  The system of Claim 1 including a turbocharger.

3.  A system comprising a piston engine and a turbocharger wherein:

    The turbocharger compressor pumps some fresh air to the engine exhaust manifold.

4.  The system of claim 1 wherein the fresh airflow from the supercharger enters the exhaust manifold at points furthest from the manifold outlet.

5.  The system of claim 2 wherein the fresh airflow from the supercharger enters the exhaust manifold at points furthest from the manifold outlet.

6.  A system comprising a piston engine, a turbocharger, and a supercharger wherein:

    The supercharger pumps fresh air to the exit of the engine exhaust manifold.

7.  A system comprising a piston engine, a turbocharger, and a supercharger wherein:

    The supercharger pumps fresh air to a conduit connecting the engine exhaust manifold exit to the inlet of the turbocharger turbine.

8.  A system comprising a piston engine, a turbocharger, and a supercharger wherein:

    The supercharger pumps fresh air to the inlet of the turbocharger turbine.

9.  A system comprising a piston engine, a turbocharger, a supercharger, and a hydrostatic drive wherein:

    The supercharger pumps fresh air to the engine exhaust manifold.

10. A system comprising a piston engine, a turbocharger, an intercooler, and a supercharger wherein:

    The supercharger pumps fresh air to the engine exhaust manifold.

EP 1 233 162 A1

1 atm 1301 F

TurboCharger
Turbine

3 atm 1951 F

Exhaust Manifold

3 atm 1951F
15.75 kg/m

Fresh Air
1 atm, 100F, 1.1 g/l

TurboCharger
Compressor

3 atm 307F  15.3 Kg/m

Engine Intake Manifold

0.44 Kg/m
48 kBtu/kg

Combustion Cylinder

Figure 1:  Process Flow Diagram for a Conventional Turbocharged Engine

Figure 2: Process Flow Diagram for the Invention

## Supplemental Air System

Figure 3

Figure 4

## Supplemental Air Conversion System

Figure 5

Figure 6

Supplemental Air System

Figure 7

Figure 8

**European Patent Office**

**EUROPEAN SEARCH REPORT**

Application Number

EP 01 11 7778

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 121 474 A (KOMATSU MFG CO LTD) 21 December 1983 (1983-12-21) * page 1, line 101 - page 2, line 18; figures 1,7 * | 1-3,6,7 | F02B37/00 F02B37/10 F01N3/32 |
| X | DE 198 33 148 A (DAIMLER CHRYSLER AG) 27 January 2000 (2000-01-27) * column 4, line 11 - line 41 * * column 5, line 66 - column 6, line 19; figures 1,2 * | 1,2,4,5, 10 | |
| X | US 4 674 283 A (ISHIDA NOBORU ET AL) 23 June 1987 (1987-06-23) * column 3, line 44 - column 4, line 8; figures 1,2 * | 1,2,4-8 | |
| X | PATENT ABSTRACTS OF JAPAN vol. 010, no. 238 (M-508), 16 August 1986 (1986-08-16) & JP 61 070115 A (NISSAN MOTOR CO LTD), 10 April 1986 (1986-04-10) * abstract; figures 1-4 * | 1,2,6,7 | |
| X | GB 1 140 877 A (MASCHF AUGSBURG NUERNBERG AG) 22 January 1969 (1969-01-22) * page 2, line 55 - page 3, line 84; figure 1 * | 1-3,8 | TECHNICAL FIELDS SEARCHED (Int.Cl.7) F02B F01N F16H |
| X | US 4 322 949 A (BYRNE JOE L ET AL) 6 April 1982 (1982-04-06) * column 4, line 12 - line 58 * * column 9, line 13 - column 10, line 42; figure 10 * | 1-3,7,9 | |
| X | DE 23 26 989 A (DAIMLER BENZ AG) 12 December 1974 (1974-12-12) * page 3, paragraph 3 - page 4, paragraph 2; figure * | 1,2,4,5, 10 | |

-/--

The present search report has been drawn up for all claims

| Place of search | Date of completion of the search | Examiner |
|---|---|---|
| THE HAGUE | 2 July 2002 | Hakhverdi, M |

**European Patent Office**

## EUROPEAN SEARCH REPORT

Application Number

EP 01 11 7778

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 091 620 A (DORSCH HEINZ) 30 May 1978 (1978-05-30) * column 3, line 20 - line 44; figure * | 1,2,6,7 | |
| X | DE 43 38 696 A (AUDI NSU AUTO UNION AG) 18 May 1995 (1995-05-18) * column 2, line 26 - line 49; figure * | 1,2,4,5 | |
| X | DE 196 47 959 C (DAIMLER BENZ AG) 27 November 1997 (1997-11-27) * column 2, line 2 - line 63; figure * | 1,2,8 | |
| A | US 3 665 787 A (WILKINSON WILLIAM H) 30 May 1972 (1972-05-30) * column 2, line 33 - line 70; figure 1 * | 9 | |

TECHNICAL FIELDS SEARCHED (Int.Cl.7)

The present search report has been drawn up for all claims

| Place of search | Date of completion of the search | Examiner |
|---|---|---|
| THE HAGUE | 2 July 2002 | Hakhverdi, M |

EPO FORM 1503 03.82 (P04C01)

**EP 1 233 162 A1**

## ANNEX TO THE EUROPEAN SEARCH REPORT
## ON EUROPEAN PATENT APPLICATION NO.

EP 01 11 7778

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2002

| Patent document cited in search report | | Publication date | Patent family member(s) | | Publication date |
|---|---|---|---|---|---|
| GB 2121474 | A | 21-12-1983 | NONE | | |
| DE 19833148 | A | 27-01-2000 | DE | 19833148 A1 | 27-01-2000 |
| | | | US | 6272860 B1 | 14-08-2001 |
| US 4674283 | A | 23-06-1987 | JP | 1624466 C | 18-11-1991 |
| | | | JP | 2050298 B | 01-11-1990 |
| | | | JP | 61096138 A | 14-05-1986 |
| JP 61070115 | A | 10-04-1986 | NONE | | |
| GB 1140877 | A | 22-01-1969 | DE | 1451910 A1 | 10-07-1969 |
| US 4322949 | A | 06-04-1982 | US | 4285200 A | 25-08-1981 |
| | | | AT | 18588 T | 15-03-1986 |
| | | | BR | 8102372 A | 12-01-1982 |
| | | | CA | 1145957 A1 | 10-05-1983 |
| | | | DE | 3174034 D1 | 17-04-1986 |
| | | | EP | 0040910 A2 | 02-12-1981 |
| | | | JP | 1293636 C | 16-12-1985 |
| | | | JP | 57024418 A | 09-02-1982 |
| | | | JP | 60017929 B | 08-05-1985 |
| | | | BR | 8003382 A | 31-03-1981 |
| | | | CA | 1143169 A1 | 22-03-1983 |
| | | | CA | 1156841 A2 | 15-11-1983 |
| | | | DE | 3060807 D1 | 28-10-1982 |
| | | | EP | 0022678 A1 | 21-01-1981 |
| | | | JP | 1273964 C | 11-07-1985 |
| | | | JP | 56018025 A | 20-02-1981 |
| | | | JP | 59051649 B | 15-12-1984 |
| DE 2326989 | A | 12-12-1974 | DE | 2326989 A1 | 12-12-1974 |
| US 4091620 | A | 30-05-1978 | DE | 2541371 A1 | 24-03-1977 |
| | | | FR | 2324867 A1 | 15-04-1977 |
| DE 4338696 | A | 18-05-1995 | DE | 4338696 A1 | 18-05-1995 |
| DE 19647959 | C | 27-11-1997 | DE | 19647959 C1 | 27-11-1997 |
| US 3665787 | A | 30-05-1972 | CA | 929767 A1 | 10-07-1973 |
| | | | DE | 2127205 A1 | 03-02-1972 |
| | | | ES | 393283 A1 | 16-09-1974 |
| | | | FR | 2103203 A5 | 07-04-1972 |
| | | | GB | 1353205 A | 15-05-1974 |

EPO FORM P0459

For more details about this annex : see Official Journal of the European Patent Office, No. 12/82

16